# EUROPEAN PATENT SPECIFICATION

(11) **EP 2 858 149 B1**
(45) Date of publication and mention of the grant of the patent: **02.01.2019**
(21) Application number: 13800194.6
(22) Date of filing: 30.05.2013
(51) Int. Cl.: H01M 4/133, H01M 4/36, H01M 4/587, H01M 4/62, H01M 10/0525, H01M 4/02

(54) **NEGATIVE ELECTRODE FOR LITHIUM ION SECONDARY BATTERY, NEGATIVE ELECTRODE SLURRY FOR LITHIUM ION SECONDARY BATTERY, AND LITHIUM ION SECONDARY BATTERY**
NEGATIVELEKTRODE FÜR LITHIUM-IONEN-SEKUNDÄRBATTERIE, NEGATIVELEKTRODENSUSPENSION FÜR LITHIUM-IONEN-SEKUNDÄRBATTERIE UND LITHIUM-IONEN-SEKUNDÄRBATTERIE
ÉLECTRODE NÉGATIVE POUR BATTERIE SECONDAIRE AU LITHIUM-ION, SUSPENSION D'ÉLECTRODE NÉGATIVE POUR BATTERIE SECONDAIRE AU LITHIUM-ION, ET BATTERIE SECONDAIRE AU LITHIUM-ION

(30) Priority: 04.06.2012 JP 2012127013
(43) Date of publication of application: 08.04.2015
(73) Proprietor: NEC Energy Devices, Ltd., Chuo-ku Sagamihara-shi Kanagawa 252-5298 (JP)
(72) Inventor: WAKI, Ippei, Sagamihara-shi Kanagawa 2525298 (JP); KONO, Yasutaka, Sagamihara-shi Kanagawa 2525298 (JP); OHTA, Tomoyuki, Sagamihara-shi Kanagawa 2525298 (JP)
(74) Representative: Vossius & Partner Patentanwälte Rechtsanwälte mbB
(86) International application number: PCT/JP2013/064992
(87) International publication number: WO 2013/183530

(56) References cited:
- WO-A1-2012/057290
- JP-A- H06 267 533
- JP-A- H11 354 122
- JP-A- 2000 331 672
- JP-A- 2005 317 493
- JP-A- 2007 095 534
- JP-A- 2007 145 697
- JP-A- 2009 193 805
- JP-A- 2012 074 297

## Description

### TECHNICAL FIELD

The present invention relates to a negative electrode for a lithium ion secondary battery, a negative electrode slurry for a lithium ion secondary battery, and a lithium ion secondary battery.

### BACKGROUND ART

In recent years, lithium ion secondary batteries have been used as batteries for small-sized apparatuses such as laptop computers, mobile phones, electric tools, and electronic and communication apparatuses. In addition, recently, lithium ion secondary batteries have also started to be used as batteries for large-sized apparatuses such as electric vehicles and electric power storage, in addition to small-sized apparatuses.

Typically, a lithium ion secondary battery includes: a positive electrode that contains a metal oxide such as lithium cobalt composite oxide as an active material; a negative electrode that contains a carbon material such as graphite as an active material; and an electrolytic solution in which a lithium salt is dissolved. The battery is charged and discharged by lithium ions moving between the positive electrode and the negative electrode.

As the negative electrode active material, the use of natural graphite which is rich in reserves and can easily reduce cost has increased instead of artificial graphite which has been used in the related art. However, since natural graphite has a higher graphitization degree than artificial graphite, reactivity between an edge surface of natural graphite and an electrolytic solution increases, and deterioration of battery characteristics such as a decrease in charge and discharge efficiency is significant. Therefore, a technique is studied in which the edge surface of natural graphite is coated with carbon having lower crystallinity than natural fiber to suppress a side reaction with the electrolytic solution.

As a negative electrode active material for a lithium ion secondary battery, Patent Document 1 (Japanese Unexamined patent publication NO. 2000-3708) describes a coated carbon material in which a part or the entire portion of a carbon material which is a chamfered core is coated with a coating film-forming carbon material. In addition, Patent Document 1 also describes that natural graphite or artificial graphite is used as the carbon material and describes that pitch or tar is used as the coating film-forming carbon material.

Patent Document 1 describes that, by adopting this coated carbon material as the negative electrode active material for a lithium ion secondary battery, a lithium ion secondary battery having superior cycling characteristics, high capacity (per weight and per volume), and high stability can be obtained.

As a negative electrode active material for a lithium ion secondary battery, Patent Document 2 (Japanese Unexamined patent publication NO. 2010-92649) discloses a mixture of graphite powder A and graphite powder B, in which the graphite powder A is obtained by mixing flaky natural graphite powder with binder pitch, preparing a molded article using a well-known molding method, firing the molded article to obtain a graphitized block, and crushing the graphitized block, and the graphite powder B is obtained by coating spherical natural graphite with pitch and firing the coated natural graphite to be graphitized.

Patent Document 2 describes the following. By mixing the graphite powders A and B having the same degree of crushing easiness and different shapes with each other, a negative electrode active material having superior permeability to an electrolytic solution is obtained even at a high electrode density of 1.7 g/cm³ or higher. Therefore, a negative electrode for a lithium ion secondary battery having small capacity loss by charge and discharge and having superior cycling characteristics can be manufactured at a low cost.

Patent Document 3 discloses further carbon-coated graphites for negative electrode active materials.

### RELATED DOCUMENT

### PATENT DOCUMENT

[Patent Document 1] Japanese Unexamined patent publication NO. 2000-3708
[Patent Document 2] Japanese Unexamined patent publication NO. 2010-92649
[Patent Document 3] JP 2012-74297 A

### DISCLOSURE OF THE INVENTION

As described in Patent Documents 1 and 2, when the negative electrode active material in which the edge surface of graphite is coated with carbon having lower crystallinity than graphite is used, charge and discharge efficiency decreases. The reason is considered to be that, due to a large amount of carbon having low crystallinity, irreversible capacity derived from a side reaction between the low crystalline carbon and the electrolytic solution increases.

As described above, the lithium ion secondary battery using the negative electrode active material described in Patent Documents 1 and 2 does not satisfy charge-discharge characteristics.

Accordingly, an object of the present invention is to provide a negative electrode for a lithium ion secondary battery with which a lithium ion secondary battery having superior charge-discharge characteristics can be obtained.

In order to achieve the above-described object, the present inventors have thoroughly investigated charge-discharge characteristics while changing the coating amount of a carbon material which is coated on graphite powder. As a result, it was found that, by reducing the coating amount of the carbon material, the binding property of a binder to a negative electrode active material is improved; as a result, rate characteristics can be improved. However, although rate characteristics are improved, initial charge and discharge efficiency deteriorates.

That is, the present inventors have found that there is a trade-off relationship between initial charge and discharge efficiency and rate characteristics and this trade-off relationship cannot be improved by controlling only the coating amount of the carbon material.

Therefore, the present inventors have further thoroughly investigated. As a result, the present inventors have found that, when a negative electrode active material satisfying specific requirements is used, the above-described trade-off relationship can be improved and a lithium ion secondary battery having superior charge-discharge characteristics can be obtained, thereby completing the present invention.

That is, according to the present invention,
there is provided a negative electrode for a lithium ion secondary battery according to claim 1.

In addition, according to the present invention,
there is provided a negative electrode slurry for a lithium ion secondary battery according to claim 7.

Further, according to the present invention,
there is provided a lithium ion secondary battery including: the above-described negative electrode for a lithium ion secondary battery according to the present invention; an electrolyte layer; and a positive electrode.

According to the present invention, it is possible to provide a negative electrode for a lithium ion secondary battery with which a lithium ion secondary battery having superior charge-discharge characteristics can be obtained.

### BRIEF DESCRIPTION OF THE DRAWINGS

The above-described object and other objects, characteristics, and advantageous effects will be described in more detail using the following preferred embodiments and accompanying drawings.
FIG. 1 is a cross-sectional view illustrating an example of a structure of a negative electrode for a lithium ion secondary battery according to an embodiment of the present invention.
FIG. 2 is a cross-sectional view illustrating an example of a structure of a lithium ion secondary battery according to an embodiment of the present invention.

### DESCRIPTION OF EMBODIMENTS

Hereinafter, embodiments of the present invention will be described using the drawings. In all the drawings, the same components are represented by the same reference numerals, and the description thereof will not be repeated. In addition, in the drawings, the shape, size, and positional relationship of each component are schematically illustrated so as to make the present invention easy to understand and are different from those of the actual ones. In the embodiments, unless specified otherwise, a layer including a negative electrode active material will be referred to as "negative electrode active material layer", and an electrode in which the negative electrode active material layer is formed on a current collector will be referred to as "negative electrode".

### <Negative Electrode for Lithium Ion Secondary Battery>

A negative electrode for a lithium ion secondary battery according to an embodiment of the invention includes a negative electrode active material and a binder. The negative electrode active material satisfies the following requirements (A), (B), and (C):
(A) graphite powder is used as a core material, and at least a part of a surface of the graphite powder is coated with a carbon material having lower crystallinity than the graphite powder;
(B) a specific surface area measured using a nitrogen adsorption BET method is more than or equal to 0.8 m²/g and less than or equal to 5.3 m²/g; and
(C) an amount of dibutyl phthalate (hereinafter, referred to as "DBP") absorption measured according to JIS K 6217-4 is more than or equal to 34 cm³/100 g and less than or equal to 43 cm³/100 g.

Hereinafter, a material for forming the negative electrode for a lithium ion secondary battery according to the embodiment will be described.

### (negative electrode Active Material)

In the negative electrode active material according to the embodiment, graphite powder is used as a core material, and at least a part of a surface of the graphite powder is coated with a carbon material having lower crystallinity than the graphite powder; In particular, it is preferable that an edge portion of the graphite powder be coated with the carbon material. By the coating of the edge portion of the graphite powder, a irreversible reaction between the edge portion and an electrolytic solution can be suppressed. As a result, a decrease in initial charge and discharge efficiency caused by an increase in irreversible capacity can be further suppressed.

Here, the carbon material having lower crystallinity than the graphite powder is amorphous carbon such as soft carbon or hard carbon.

Examples of the graphite powder used as the core material include natural graphite and artificial graphite manufactured by heating petroleum and coal cokes. In the embodiment, these graphite powders may be used alone or in a combination of two or more kinds. Among these, natural graphite is preferable from the viewpoint of cost.

Here, natural graphite refers to graphite which is naturally produced as an ore. Regarding natural graphite used as the core material of the embodiment, a producing area, characteristics, and kind thereof are not particularly limited.

In addition, artificial graphite refers to graphite which is artificially manufactured and graphite which is close to a perfect crystal of graphite. Such artificial graphite is obtained by treating tar or coke, which is obtained from a residue after, for example, dry distillation of coal and distillation of crude oil, in a firing process and a graphitization process.

The negative electrode active material according to the embodiment can be manufactured by mixing an organic compound as the carbon material, which is carbonized in the firing process to have lower crystallinity than the graphite powder, with the graphite powder and firing the mixture to carbonize the organic compound.

The organic compound which is mixed with the graphite powder is not particularly limited as long as a carbon material having lower crystallinity than the graphite powder can be obtained by being fired to be carbonized, and examples thereof include tars such as petroleum tar and coal tar; pitches such as petroleum pitch and coal pitch; thermoplastic resins such as polyvinyl chloride, polyvinyl acetate, polyvinyl butyral, polyvinyl alcohol, polyvinylidene chloride, and polyacrylonitrile; thermosetting resins such as phenol resin and furfuryl alcohol resin; natural resins such as cellulose; and aromatic hydrocarbons such as naphthalene, alkylnaphthalene, and anthracene.

In the embodiment, these organic compounds may be used alone or in a combination of two or more kinds. In addition, optionally, these organic compounds may be dissolved or dispersed in a solvent.

Among these organic compounds, tars and pitches are preferable from the viewpoint of cost.

In the negative electrode active material according to the embodiment, a specific surface area measured using a nitrogen adsorption BET method is more than or equal to 0.8 m²/g and less than or equal to 5.3 m²/g and preferably more than or equal to 0.9 m²/g and less than or equal to 5.0 m²/g.

By controlling the specific surface area to be less than or equal to the upper limit, a decrease in initial charge and discharge efficiency caused by an increase in irreversible capacity can be further suppressed. In addition, by controlling the specific surface area to be less than or equal to the upper limit, the stability of a negative electrode slurry described below can be improved.

By controlling the specific surface area to be more than or equal to the lower limit, an area where lithium ions are intercalated or deintercalated increases, and rate characteristics can be improved.

In addition, by controlling the specific surface area to be in the above-described range, the binding property of the binder can be improved.

In the negative electrode active material according to the embodiment, an amount of DBP absorption measured according to JIS K 6217-4 is more than or equal to 34 cm³/100 g and less than or equal to 43 cm³/100 g.

By controlling the DBP absorption amount to be in the above-described range, the diffusibility of lithium ions is improved, and rate characteristics can be improved. In addition, by controlling the DBP absorption amount to be in the above-described range, the binding property of the binder can be improved.

In the negative electrode active material according to the embodiment, a ratio (hereinafter, referred to as "coating amount") of the carbon material derived from the organic compound to 100 mass% of the negative electrode active material is more than or equal to 0.7 mass% and less than or equal to 8.0 mass%, preferably more than or equal to 0.7 mass% and less than or equal to 7.0 mass%, and particularly preferably more than or equal to 0.8 mass% and less than or equal to 6.5 mass%.

By controlling the coating amount of the carbon material to be less than or equal to the upper limit, an area where lithium ions are intercalated or deintercalated increases, and rate characteristics can be improved.

By controlling the coating amount of the carbon material to be more than or equal to the lower limit, a decrease in initial charge and discharge efficiency caused by an increase in irreversible capacity can be further suppressed. In addition, by controlling the coating amount of the carbon material to be more than or equal to the lower limit, the stability of a negative electrode slurry described below can be improved.

Here, the coating amount of the carbon material can be calculated by thermogravimetric analysis. More specifically, when the negative electrode active material is heated to 900°C in an oxygen atmosphere at a temperature increase rate of 5 °C/min using a thermogravimetric analyzer (for example, TGA7 analyzer, manufactured by PerkinElmer Co. , Ltd.), a decrease in mass from a temperature where the mass starts to decrease to a temperature where a mass decrease rate is slow and the mass decrease is accelerated can be obtained as the coating amount.

An average particle size d₅₀ of the negative electrode active material according to the embodiment in a volume particle size distribution, which is obtained using a laser diffraction scattering particle size distribution measurement method, is preferably more than or equal to 9 µm and less than or equal to 30 µm, more preferably more than or equal to 12 µm and less than or equal to 27 µm, and particularly preferably more than or equal to 15 µm and less than or equal to 25 µm.

In the negative electrode active material according to the embodiment, an average thickness of a coating layer formed of the carbon material which is coated on the graphite powder is preferably more than or equal to 0.5 nm and less than or equal to 15 nm and more preferably more than or equal to 1 nm and less than or equal to 10 nm.

Here, the average thickness of the coating layer formed of the carbon material can be measured, for example, using a vernier caliper after obtaining a transmission electron microscope (TEM) image.

The negative electrode for a lithium ion secondary battery according to the embodiment includes the negative electrode active material which satisfies all the above-described requirements (A), (B), and (C). As a result, a trade-off relationship between initial charge and discharge efficiency and rate characteristics can be improved, and thus a lithium ion secondary battery having superior charge-discharge characteristics can be obtained.

### (Method Of Manufacturing Negative Electrode Active Material)

The negative electrode active material according to the embodiment can be manufactured, for example, through the following processes (1) to (4).
(1) The graphite powder and the organic compound are mixed using a mixer, optionally, along with a solvent. As a result, the organic compound is adhered to at least a part of the surface of the graphite powder.
(2) When the solvent is used, the obtained mixture is heated, optionally, under stirring to remove the solvent.
(3) The mixture is heated in an inert gas atmosphere such as nitrogen gas, carbon gas, or argon gas or in a non-oxidizing atmosphere to carbonize the adhered organic compound. As a result, a negative electrode active material in which at least a part of the surface of the graphite powder is coated with the carbon material having lower crystallinity than the graphite powder is obtained.

The lower limit of a heating temperature of this process is not particularly limited because it is appropriately determined based on the kind and thermal history of the organic compound. However, the lower limit is typically higher than or equal to 900°C, preferably higher than or equal to 1000°C, and more preferably higher than or equal to 1100°C.

In addition, the upper limit of the heating temperature of this process is not particularly limited because it is appropriately determined based on the kind and thermal history of the organic compound. However, the upper limit is typically lower than or equal to 2500°C, preferably lower than or equal to 2000°C, and more preferably lower than or equal to 1800°C.

The temperature increase rate, cooling rate, heating time, and the like are appropriately determined based on the kind and thermal history of the organic compound.

In addition, in the embodiment, after the graphite powder is coated with the organic compound, the coating layer may be oxidized before being carbonized. By oxidizing the coating layer, an excessive increase in the crystallinity of the coating layer can be suppressed.
(4) Optionally, the obtained negative electrode active material is subjected to pulverizing, crushing, classifying, and the like to obtain a negative electrode active material having desired physical properties. This process may be performed before the process (3) or before and after the process (3). In addition, before coating, the graphite powder may be subjected to pulverizing, crushing, classifying, and the like.

In order to obtain the negative electrode active material according to the embodiment, it is important to appropriately adjust each of the above-described processes. However, the method of manufacturing the negative electrode active material according to the embodiment is not limited to the above-described method. By appropriately adjusting various conditions, the negative electrode active material according to the embodiment can be obtained.

### (Binder)

The binder included in the negative electrode for a lithium ion secondary battery according to the embodiment serves to bind the particles of the negative electrode active material to each other and to bind the negative electrode active material and a current collector to each other.

The binder according to the embodiment is not limited as long as an electrode can be formed with it and it has sufficient electrochemical stability. Examples of the binder include polyvinyl alcohol, polyacrylic acid, carboxymethyl cellulose, polytetrafluoroethylene, polyvinylidene fluoride, styrene butadiene rubber, and polyimide. These binders may be used alone or in a combination of two or more kinds.

Among these binders, polyvinylidene fluoride or styrene butadiene rubber is preferable.

A method of using the binder is not particularly limited. The binder may be dissolved in a solvent or may be dispersed in an aqueous medium to be used. From the viewpoint of eco-friendliness, it is preferable that the above-described binder be dispersed in an aqueous medium to be used, that is, a so-called aqueous binder is preferably used.

The solvent in which the binder is dissolved is not particularly limited as long as the binder can be dissolved therein, and examples thereof include N-methylpyrrolidone, dimethylacetamide, dimethylformamide, and dimethylsulfoxide. These solvents may be used alone or in a combination of two or more kinds. Among these, N-methylpyrrolidone is preferable.

The aqueous medium in which the binder is dispersed is not particularly limited as long as the binder can be dispersed therein, and examples thereof include distilled water, ion exchange water, city water, and industrial water. Among these, distilled water and ion exchange water are preferable. In addition, a solvent such as alcohol having high affinity to water may be mixed with water.

### (Thickener)

When the aqueous binder is used as the binder, it is preferable that the thickener be used in combination with a thickener from the viewpoint of securing fluidity suitable for coating. Therefore, the negative electrode for a lithium ion secondary battery according to the embodiment may further contain a thickener. The thickener according to the embodiment is not particularly limited as long as coating properties of a slurry for a lithium ion secondary battery described below can be improved, and examples thereof include cellulose polymers such as carboxymethyl cellulose, methyl cellulose, and hydroxypropyl cellulose, and ammonium salts or alkaline metal salts thereof; polycarboxylic acids; polyethylene oxide; polyvinylpyrrolidone; polyacrylic acid salts such as sodium polyacrylate; and water-soluble polymers such as polyvinyl alcohol. These thickeners may be used alone or in a combination of two or more kinds. Among these, carboxymethyl cellulose is preferable.

### (Conductive Additive)

The negative electrode for a lithium ion secondary battery according to the embodiment may further contain a conductive additive. The conductive additive is not particularly limited as long as it has electron conductivity and improves electrode conductivity, and examples thereof include carbon materials such as acetylene black, ketjen black, carbon black, and vapor grown carbon fiber.

### (Negative Electrode)

In the negative electrode for a lithium ion secondary battery according to the embodiment, the content of the negative electrode active material is preferably more than or equal to 93 parts by mass and less than or equal to 98.9 parts by mass and particularly preferably more than or equal to 95.1 parts by mass and less than or equal to 97.9 parts by mass with respect to 100 parts by mass of the total mass of the negative electrode (excluding a current collector described below). The content of the binder is preferably more than or equal to 0.5 parts by mass and less than or equal to 3.0 parts by mass and particularly preferably more than or equal to 1.0 part by mass and less than or equal to 2.5 parts by mass.

In addition, when the thickener is contained, the content of the thickener is preferably more than or equal to 0.5 parts by mass and less than or equal to 2.0 parts by mass and particularly preferably more than or equal to 0.8 parts by mass and less than or equal to 1.7 parts by mass. In addition, when the conductive additive is contained, the content of the conductive additive is preferably more than or equal to 0.1 parts by mass and less than or equal to 2.0 parts by mass and particularly preferably more than or equal to 0.3 parts by mass and less than or equal to 1.2 parts by mass.

When the composition of the negative electrode is in the above-described range, a balance between the yield of an electrode and battery characteristics of the obtained lithium ion secondary battery is particularly superior.

The thickness of the negative electrode for a lithium ion secondary battery (excluding a current collector described below) according to the embodiment is not particularly limited, but is typically more than or equal to 5 µm and less than or equal to 300 µm. When the thickness of the negative electrode is in the above-described range, a balance between the productivity of an electrode and battery characteristics is superior.

The density (hereinafter, referred to as "electrode density") of the negative electrode for a lithium ion secondary battery (excluding a current collector described below) according to the embodiment is not particularly limited, but is typically more than or equal to 0.5 g/cm³ and less than or equal to 1.8 g/cm³.

### <Method of Manufacturing Negative Electrode For Lithium Ion Secondary Battery>

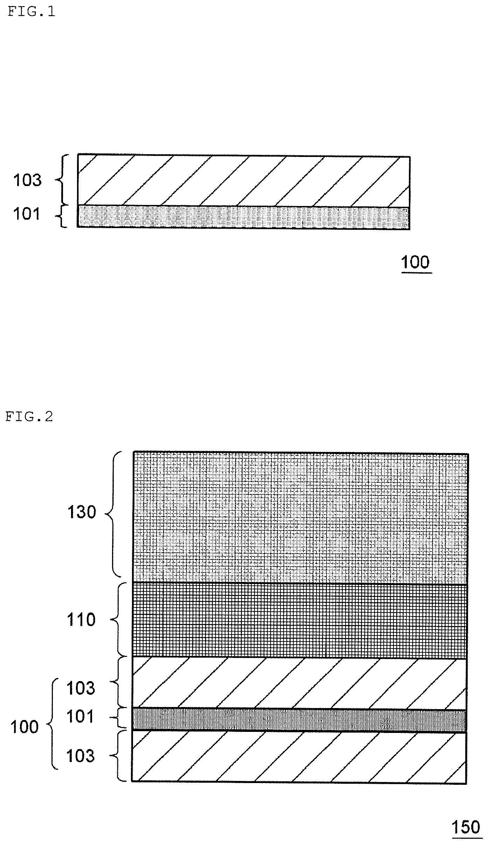

Next, a method of manufacturing a negative electrode 100 for a lithium ion secondary battery according to the embodiment will be described. FIG. 1 is a cross-sectional view illustrating an example of a structure of the negative electrode 100 for a lithium ion secondary battery according to the embodiment of the present invention.

The negative electrode 100 for a lithium ion secondary battery according to the embodiment is not particularly limited but can be obtained through, for example, the following two steps (1) and (2).
(1) The active material and the binder, optionally, the thickener and the conductive additive are mixed with each other to prepare a negative electrode slurry for a lithium ion secondary battery.
(2) The negative electrode slurry for a lithium ion secondary battery is coated on a current collector 101 and is dried.

Hereinafter, each process will be described.

### (Process of Preparing negative electrode Slurry for Lithium Ion Secondary Battery)

First, the process of preparing the negative electrode slurry according to the embodiment will be described. The negative electrode slurry according to the embodiment is obtained by mixing the binder, optionally, the thickener and the conductive additive with each other using a mixer and dispersing or dissolving the mixture in a solvent or in an aqueous medium.

The solvent or the aqueous medium is not particularly limited, but those which are the same as the solvent or the aqueous medium used in the above-described binder can be used.

At this time, as the mixer to be used, a well-known mixer such as a ball mill or a planetary mixer can be used without any particular limitation.

### (Process of Coating negative electrode Slurry on Current Collector and Drying negative electrode Slurry)

Next, the obtained negative electrode slurry is coated on the current collector 101 and is dried to form a negative electrode active material layer 103 thereon.

As a coating method of the negative electrode slurry, a common method can be used. Examples of the method include a reverse roll method, a direct roll method, a doctor blade method, a knife method, an extrusion method, a curtain method, a gravure method, a bar method, a dip method, and a squeeze method. Among these, a doctor blade method, a knife method, or an extrusion method is preferable from the viewpoint of obtaining a superior surface state of a coating layer according to the physical properties of the negative electrode slurry such as viscosity and drying properties.

The negative electrode slurry may be coated on a single surface or both surfaces of the current collector 101. When the negative electrode slurry is coated on both surfaces of the current collector 101, each surface may be sequentially coated or both the surfaces may be simultaneously coated. In addition, the surfaces of the current collector 101 may be continuously or intermittently coated. The thickness, length, and width of the coating layer can be appropriately determined according to the size of a battery.

As a drying method of the coated negative electrode slurry, a common method can be used. In particular, it is preferable that hot air, a vacuum, infrared rays, far infrared rays, electron rays, and low-temperature air be used alone or in a combination of two or more kinds. A drying temperature is in a range of more than or equal to 50°C and less than or equal to 350°C and particularly preferably in a range of more than or equal to 50°C and less than or equal to 200°C.

### (Current Collector)

The current collector 101 used for manufacturing the negative electrode according to the embodiment is not particularly limited, but copper is preferable from the viewpoint of cost, availability, electrochemical stability, and the like. In addition, the shape of the current collector 101 is not particularly limited, but one having a foil shape and a thickness of more than or equal to 0.001 mm and less than or equal to 0.5 mm can be used.

Optionally, the negative electrode 100 for a lithium ion secondary battery according to the embodiment may be pressed so as to increase electrode density. As a pressing method, a well-known method can be used, but a mold pressing method or a calender pressing method is preferable. A pressing pressure is not particularly limited but is preferably in a range of more than or equal to 0.2 t/cm² and less than or equal to 3 t/cm².

The thickness and density of the negative electrode active material layer 103 according to the embodiment is not particularly limited because it is appropriately determined according to the intended use of a battery, and, typically, can be set based on well-known information.

### <Lithium Ion Secondary Battery>

Next, a lithium ion secondary battery 150 according to the embodiment will be described. FIG. 2 is a cross-sectional view illustrating an example of a structure of the lithium ion secondary battery 150 according to the embodiment of the present invention. The lithium ion secondary battery 150 according to the embodiment includes at least the above-described negative electrode 100 for a lithium ion secondary battery, an electrolyte layer 110, and a positive electrode 130. The lithium ion secondary battery 150 according to the embodiment can be prepared according to a well-known method. For example, the lithium ion secondary battery 150 is manufactured according to a well-known method using the negative electrode 100 for a lithium ion secondary battery according to the embodiment, the positive electrode 130, an electrolytic solution, a separator, and the like. As the electrodes, a stacked body or a wound body can be used. As a case, a metal case or an aluminum laminate case can be appropriately used. The shape of the battery may be any one of a coin shape, a button shape, a sheet shape, a cylindrical shape, an angular shape, a flat shape, and the like.

### (Positive Electrode)

A positive electrode active material used in the lithium ion secondary battery according to the embodiment is appropriately selected according to the intended use, but a material having high electron conductivity is preferable such that lithium ions can be reversibly intercalated or deintercalated and electrons are easily transported. Examples of the positive electrode active material include composite oxides between lithium and transition metals, such as lithium nickel composite oxide, lithium cobalt composite oxide, lithium manganese composite oxide, and lithium-manganese-nickel composite oxide; transition metal sulfides such as TiS₂, FeS, and MoS₂; transition metal oxides such as MnO, V₂O₅, V₆O₁₃, and TiO₂; and olivine-type lithium phosphorus oxides.

For example, the olivine-type lithium phosphorus oxides include: at least one element selected from the group consisting of Mn, Cr, Co, Cu, Ni, V, Mo, Ti, Zn, Al, Ga, Mg, B, Nb, and Fe; lithium; phosphorus; and oxygen. In order to improve properties of these compounds, a part of the elements may be substituted with another element.

Among these, olivine-type lithium iron phosphorus oxides, lithium cobalt composite oxide, lithium nickel composite oxide, lithium manganese composite oxide, and lithium-manganese-nickel composite oxide are preferable. These positive electrode active materials have not only high action potential but also high capacity and energy density.

As a current collector for a positive electrode, for example, an aluminum foil can be used.

In addition, the current collector for a positive electrode may be coated with a conductive thin film in order to prevent corrosion through a slurry. The conductive thin film is not particularly limited as long as it has corrosion resistance and electrochemical stability, and examples thereof include a mixture of the above-described conductive additive and a polymer such as polyvinylidene fluoride.

In addition, the positive electrode 130 according to the embodiment can be manufactured using a well-known manufacturing method.

The electrolyte layer 110 includes, for example, an electrolytic solution and a separator.

As an electrolyte in the electrolytic solution of the battery, any of well-known lithium salts can be used, and the electrolyte can be appropriately selected according to the kind of the active material. Examples of the electrolyte include LiClO₄, LiBF₆, LiPF₆, LiCF₃SO₃, LiCF₃CO₂, LiAsF₆, LiSbF₆, LiB₁₀Cl₁₀, LiAlCl₄, LiCl, LiBr, LiB(C₂H₅)₄, CF₃SO₃Li, CH₃SO₃Li, LiCF₃SO₃, LiC₄F₉SO₃, Li(CF₃SO₂)₂N, and lower fatty acid lithium carboxylate.

A solvent in which the electrolyte is dissolved is not particularly limited as long as it is typically used as a liquid in which the electrolyte is dissolved. Examples of the solvent include carbonates such as ethylene carbonate (EC), propylene carbonate (PC), butylene carbonate (BC), dimethyl carbonate (DMC), diethyl carbonate (DEC), methylethyl carbonate (MEC), and vinylene carbonate (VC); lactones such as γ-butyrolactone and γ-valerolactone; ethers such as trimethoxymethane, 1,2-dimethoxyethane, diethyl ether, 2-ethoxyethane, tetrahydrofuran, and 2-methyltetrahydrofuran; sulfoxides such as dimethyl sulfoxide; oxolane such as 1,3-dioxolane, and 4-methyl-1,3-dioxolane; nitrogen-containing elements such as acetonitrile, nitromethane, formamide, and dimethylformamide; organic acid esters such as methyl formate, methyl acetate, ethyl acetate, butyl acetate, methyl propionate, and ethyl propionate; trialkyl phosphates and diglymes; triglymes; sulfolanes such as sulfolane and methylsulfolane; oxazolidinones such as 3-methyl-2-oxazolidinone; and sultones such as 1,3-propane sultone, 1,4-butane sultone, and naphtha sultone. These solvents may be used alone or in a combination of two or more kinds.

As the separator, a porous substrate is preferable. Examples of the form of the separator include a membrane, a film, and non-woven fabric.

As the separator, a porous separator or a porous separator in which a gel polymer is coated on a single surface or both surfaces thereof can be used. Examples of the porous separator include a porous polyolefin separator such as a polypropylene or polyethylene separator; and a separator such as polyvinylidene fluoride, polyethylene oxide, polyacrylonitrile, and a polyvinylidene fluoride hexafluoropropylene copolymer.

The gel polymer is not particularly limited as long as it can be gel during the impregnation of the electrolytic solution. Examples of the gel polymer include polyvinylidene fluoride, polyethylene oxide, polyacrylonitrile, and a polyvinylidene fluoride hexafluoropropylene copolymer. In addition, as a method of forming the gel polymer on the separator, a well-known method can be used. For example, after the gel polymer is dissolved in a solvent, this solution is coated on the separator.

A method of manufacturing the lithium ion secondary battery 150 according to the embodiment is not particularly limited and can be appropriately selected from among well-known methods.

The cell shape of the lithium ion secondary battery 150 according to the embodiment is not particularly limited and may be any shape. Examples of the cell shape include a button shape, a cylindrical shape, and an angular shape.

In addition, it is preferable that the lithium ion secondary battery 150 have an internal structure in which plural pairs of positive and negative electrodes and the separator are stacked. In this case, a well-known stacked type, a wound type, or a folded and stacked type can be adopted.

As the case of the lithium ion secondary battery 150 according to the embodiment, for example, a metal can or an aluminum laminate resin film can be used.

The present invention is not limited to the above-described embodiments and includes modifications, improvements, and the like thereof within a range where the object of the present invention can be achieved.

### [Examples]

Hereinafter, the present invention will be described using Examples and Comparative Examples but is not limited thereto. In the examples, "part(s)" represents "part(s) by mass" unless specified otherwise.

### [Example 1]

### (Preparation of Negative Electrode Active Material)

A negative electrode active material was prepared as follows. Hereinafter, an average particle size d₅₀ was measured using MT 3000 (manufactured by Micotrac), and a specific surface area was obtained using Quanta Sorb (manufactured by Quantachrome Corporation) with a nitrogen adsorption method.

Natural graphite having an average particle size d₅₀ of 20 µm and a specific surface area of 7.0 m²/g was used as a core material.

99.0 parts by mass of natural graphite powder and 1.0 part by mass of coal pitch powder having an average particle size d₅₀ of 35 µm and a softening temperature of 80°C were mixed by simple mixing using a V blender in the solid phase.

The obtained mixed powder was put into a graphite crucible and was heated in a nitrogen gas stream at 1300°C for 1 hour to obtain a negative electrode active material.

### (Physical Properties of Negative Electrode Active Material)

The specific surface area of the obtained negative electrode active material was 4.8 m²/g. In addition, the amount of DBP absorption of the negative electrode active material was 37 cm³/100g when measured using a method according to JIS K 6217-4.

Further, a coating amount of a carbon material was estimated using TGA7 analyzer (manufactured by PerkinElmer Co., Ltd.) with the following method. First, when 50 mg of the negative electrode active material was heated to 900°C in a atmosphere of 50 ml of pure oxygen at a temperature rise rate of 5°C/min, the mass started to decrease at about 430°C, and a decrease in mass was 0.8 mass% at about 550 °C. At this time, a mass decrease rate was slow and then the mass decrease was accelerated. It was estimated from this result that the coating amount of the carbon material in the obtained negative electrode active material was 0.8 mass%.

In addition, a transmission electron microscope (TEM) image was obtained from the obtained negative electrode active material, and an average thickness of a coating layer was measured using a vernier caliper. The average thickness of the coating layer was 5 nm. In addition, the coating layer was concentrated on an edge portion of graphite.

### (Preparation of Negative Electrode)

A negative electrode was prepared as follows. As a negative electrode active material, the above-described negative electrode active material was used.

First, an aqueous solution containing 1.0 mass% of carboxymethyl cellulose (hereinafter, referred to as "CMC") was poured into the negative electrode active material, followed by stirring. Next, after a uniform slurry was obtained, an emulsion aqueous solution containing 40 mass% of a styrene-butadiene copolymer as a binder was poured thereinto, followed by stirring. Next, this solution was uniformly coated on both surfaces of a copper foil having a thickness of 10 µm such that the capacity per unit area was the same, followed by drying. As a result, a negative electrode having 1 mass% of CMC and 1.5 mass% of the styrene-butadiene copolymer was prepared. This negative electrode was compression-molded to 1.6 g/cm³ using a roll press.

### (Preparation of Lithium Ion Secondary Battery for Evaluation of Negative Electrode)

As a positive electrode active material, a mixture containing Li(Li_{0.1}Mn_{1.9})O₄ and LiNi_{0.85}Co_{0.15}O₂ at a mass ratio of 85: 15 was used. As a binder, polyvinylidene fluoride was used.

95 parts by mass of the positive electrode active material and 5 parts by mass of polyvinylidene fluoride were mixed, and the mixture was dispersed in N-methyl-2-pyrrolidone to prepare a slurry. This slurry was uniformly coated on both surfaces of an aluminum foil having a thickness of 20 µm such that the thickness of a coating layer was 95 µm, followed by drying. Next, the aluminum foil was compression-molded using a roll press.

As a separator, a microporous polyethylene film having a thickness of 25 µm was used. In addition, as an electrolytic solution, an electrolytic solution obtained by mixing ethylene carbonate (EC) and diethyl carbonate (DEC) at a volume ratio of 30:70, dissolving 1.0 mol/L of LiPF₆ as a lithium salt therein, and adding 1 mass% of vinylene carbonate (hereinafter, referred to as "VC") was used.

The positive electrode and the negative electrode prepared as above were cut into a size of 5 cm (width)×6 cm (length), respectively. In the cut portion, one side of 5 cm×1 cm was a non-coated portion for connecting to a tab, and the size of an active material layer was 5 cm×5 cm. An aluminum positive electrode tab having a width of 5 mm, a length of 3 cm, and a thickness of 0.1 mm was connected to the non-coated portion of the positive electrode by ultrasonic welding at a length of 1 cm. Likewise, a nickel negative electrode tab having the same size as the positive electrode tab was connected to the non-coated portion of the negative electrode by ultrasonic welding. The negative electrode and the positive electrode are arranged on both surfaces of a separator having a size of 6 cm×6 cm and formed of polyethylene and polypropylene such that the active material layers overlap each other with the separator interposed therebetween. As a result, an electrode stack was obtained. Three sides of two aluminum laminate films having a size of 7 cm×10 cm except for parts of long sides were bonded to each other by thermal fusion bonding at a width of 5 mm to prepare a bag-like laminate case. The electrode stack was inserted into a portion of the laminate case at a distance of 1 cm from a short side thereof. 0.203 g of the electrolytic solution was poured into the laminate case, followed by vacuum impregnation. An opening of the laminate case was sealed by thermal fusion bonding under reduced pressure at a width of 5 mm. As a result, a laminate battery was prepared. At this time, the impregnating ability of the electrodes with the electrolytic solution was insufficient, the electrolytic solution remains in the thermal fusion bonding portion, which may cause insufficient sealing and insulation failure. However, in this example, the impregnating ability was sufficient, and the thermal fusion bonding portion was able to be sufficiently sealed. The capacity of the prepared battery was 70 mAh.

### (Examples 2 to 10 and Comparative Examples 1 to 5)

Negative electrode active materials, electrodes, and batteries were prepared with the same methods as Example 1, except that the ratio of coal pitch powder and the heating temperature were changed as shown in Table 1. Physical properties of each of the obtained negative electrode active materials are shown in Table 1.

### (Peel Strength Test)

The peel strength of each of the electrodes used for the preparation of the batteries was measured in the following procedure. Before being compression-molded using a roll press, the electrode was cut into a size of 12 mm (width)×5 cm (length), and a cellophane tape was adhered onto a current collector side of the electrode. Next, the electrode was fixed, and the cellophane tape was peeled off in a 180° direction at a speed of 50 mm/min according to JIS K 6854-2. The strength (N/m) at this time was measured 10 times, and the average value thereof was obtained as a peel strength. The obtained results are shown in Table 1.

### (Evaluation of Battery Characteristics)

Next, using each of the prepared batteries, a charge and discharge test was performed. Constant voltage and constant current charge was performed in an atmosphere of 25°C under conditions of an upper limit voltage of 4.2 V, a charge current of 70 mA, and a total charging time of 150 minutes. Next, constant current discharge (1C discharge) was performed under conditions of a lower limit voltage of 3.0 V and a discharge current of 70 mA. Next, after 10 minutes of downtime, constant current discharge (0.2C discharge) was performed again under conditions of a lower limit voltage of 3.0 V and a discharge current of 14 mA. The total capacity (charge and discharge efficiency) of the discharge capacity during 1C discharge and the discharge capacity during 0.2C discharge with respect to the charge capacity was calculated. In addition, a rate (1C/0.2C rate) of the discharge capacity at 1C discharge to the total capacity of the discharge capacity during 1C discharge and the discharge capacity during 0.2C discharge was calculated. The obtained results are shown in Table 1.

**[Table 1]**

| | Ratio of Pitch Powder (mass%) | Heating Temperature (°C) | Amount of DBP Absorption (cm³/100 g) | Specific Surface Area (m²/g) | Coating Amount (mass%) | Peel Strength (N/m) | Charge and Discharge Efficiency (%) | 1C/0.2C Rate (%) |
|---|---|---|---|---|---|---|---|---|
| Example 1 | 1.0 | 1300 | 37 | 4.8 | 0.8 | 103 | 87.4 | 96.6 |
| Example 2 | 1.5 | | 39 | 3. 9 | 1. 0 | 110 | 87.9 | 96.8 |
| Example 3 | 2.5 | | 40 | 3.1 | 2.2 | 98 | 88.2 | 95.5 |
| Example 4 | 3.5 | | 41 | 2.5 | 3.3 | 99 | 87.6 | 96.0 |
| Example 5 | 4.5 | | 42 | 2.0 | 4.2 | 103 | 87.3 | 96.3 |
| Example 6 | 6.2 | | 43 | 1.0 | 6.0 | 97 | 87.0 | 96.1 |
| Example 7 | 1.5 | 1150 | 40 | 3.9 | 1.0 | 114 | 87.3 | 97.2 |
| Example 8 | | 1200 | 40 | 3.8 | 1.0 | 107 | 88.1 | 96.3 |
| Example 9 | | 1400 | 38 | 3.8 | 0.9 | 100 | 88.8 | 95.7 |
| Example 10 | | 1700 | 35 | 3. 7 | 0.9 | 96 | 89.0 | 95.5 |
| Comparative Example 1 | 0.7 | 1300 | 36 | 5 . 5 | 0.6 | 92 | 85.0 | 96.0 |
| Comparative Example 2 | 10 | | 44 | 0. 7 | 8.8 | 88 | 85.6 | 95.0 |
| Comparative Example 3 | 1.5 | 900 | 46 | 4.0 | 1.3 | 100 | 85.5 | 96.1 |
| Comparative Example 4 | | 2100 | 31 | 4.0 | 1.4 | 91 | 88.0 | 94.4 |
| Comparative Example 5 | 0 | - | - | 7.0 | 0 | - | 84.0 | - |

## Claims

1. A negative electrode for a lithium ion secondary battery, the negative electrode comprising:
a negative electrode active material; and
a binder,
wherein the negative electrode active material satisfies the following requirements (A), (B), and (C):
(A) graphite powder is used as a core material, and at least a part of a surface of the graphite powder is coated with a carbon material having lower crystallinity than the graphite powder, and the carbon material contains amorphous carbon;
(B) a specific surface area measured using a nitrogen adsorption BET method is more than or equal to 0.8 m²/g and less than or equal to 5.3 m²/g; and
(C) an amount of dibutyl phthalate absorption measured according to JIS K 6217-4 is more than or equal to 34 cm³/100 g and less than or equal to 43 cm³/100 g, and
wherein a coating amount of the carbon material calculated by thermogravimetric analysis is more than or equal to 0.7 mass% and less than or equal to 8.0 mass% with respect to 100 mass% of the negative electrode active material.

2. The negative electrode for a lithium ion secondary battery according to Claim 1,
wherein an average particle size d₅₀ of the negative electrode active material in a volume particle size distribution, which is obtained using a laser diffraction scattering particle size distribution measurement method, is more than or equal to 9 µm and less than or equal to 30 µm.

3. The negative electrode for a lithium ion secondary battery according to Claim 1 or 2,
wherein an average thickness of a coating layer formed of the carbon material which is coated on the graphite powder is more than or equal to 0.5 nm and less than or equal to 15 nm.

4. The negative electrode for a lithium ion secondary battery according to any one of Claims 1 to 3,
wherein an edge portion of the graphite powder is coated with the carbon material.

5. The negative electrode for a lithium ion secondary battery according to any one of Claims 1 to 4,
wherein the graphite powder contains natural graphite.

6. The negative electrode for a lithium ion secondary battery according to any one of Claims 1 to 5,
wherein the binder is an aqueous binder.

7. A negative electrode slurry for a lithium ion secondary battery, the negative electrode slurry comprising:
a negative electrode active material; and
a binder,
wherein the negative electrode active material satisfies the following requirements (A), (B), and (C):
(A) graphite powder is used as a core material, and at least a part of a surface of the graphite powder is coated with a carbon material having lower crystallinity than the graphite powder, and the carbon material contains amorphous carbon;
(B) a specific surface area measured using a nitrogen adsorption BET method is more than or equal to 0.8 m²/g and less than or equal to 5.3 m²/g; and
(C) an amount of dibutyl phthalate absorption measured according to JIS K 6217-4 is more than or equal to 34 cm³/100 g and less than or equal to 43 cm³/100 g, and
wherein a coating amount of the carbon material calculated by thermogravimetric analysis is more than or equal to 0.7 mass% and less than or equal to 8.0 mass% with respect to 100 mass% of the negative electrode active material.

8. The negative electrode slurry for a lithium ion secondary battery according to Claim 7,
wherein an average particle size d₅₀ of the negative electrode active material in a volume particle size distribution, which is obtained using a laser diffraction scattering particle size distribution measurement method, is more than or equal to 9 µm and less than or equal to 30 µm.

9. The negative electrode slurry for a lithium ion secondary battery according to Claim 7 or 8,
wherein an average thickness of a coating layer formed of the carbon material which is coated on the graphite powder is more than or equal to 0.5 nm and less than or equal to 15 nm.

10. The negative electrode slurry for a lithium ion secondary battery according to any one of Claims 7 to 9,
wherein an edge portion of the graphite powder is coated with the carbon material.

11. The negative electrode slurry for a lithium ion secondary battery according to any one of Claims 7 to 10,
wherein the graphite powder contains natural graphite.

12. The negative electrode slurry for a lithium ion secondary battery according to any one of Claims 7 to 11,
wherein the binder is an aqueous binder.

13. A lithium ion secondary battery comprising:
the negative electrode for a lithium ion secondary battery according to any one of Claims 1 to 6;
an electrolyte layer; and
a positive electrode.

## Patentansprüche

1. Negative Elektrode für eine Lithiumionen-Sekundärbatterie, wobei die negative Elektrode aufweist:
ein aktives Material der negativen Elektrode; und
ein Bindemittel,
wobei das aktive Material der negativen Elektrode die folgenden Anforderungen (A), (B) und (C) erfüllt:
(A) Graphitpulver wird als ein Kernmaterial verwendet, und mindestens ein Teil einer Oberfläche des Graphitpulvers ist mit einem Kohlenstoffmaterial beschichtet, das eine geringere Kristallinität hat als das Graphitpulver, und das Kohlenstoffmaterial enthält amorphen Kohlenstoff;
(B) eine spezifische Oberfläche, gemessen unter Verwendung einer Stickstoffadsorptions-BET-Methode, ist größer oder gleich 0,8 m²/g und kleiner oder gleich 5,3 m²/g; und
(C) ein Dibutylphthalat-Absorptionsmaß, gemessen gemäß JIS K 6217-4, ist größer oder gleich 34 cm³/100 g und kleiner oder gleich 43 cm³/100 g,
wobei eine durch thermogravimetrische Analyse berechnete Beschichtungsmenge des Kohlenstoffmaterials größer oder gleich 0,7 Masse-% und kleiner oder gleich 8,0 Masse-% bezogen auf 100 Masse-% des aktiven Materials der negativen Elektrode ist.

2. Negative Elektrode für eine Lithiumionen-Sekundärbatterie nach Anspruch 1,
wobei eine mittlere Partikelgröße d₅₀ des aktiven Materials der negativen Elektrode in einer Volumen-Partikelgrößenverteilung, die unter Verwendung eines Laserbeugungs-/-streuungs-Partikelgrößenverteilungsmessverfahrens erhalten wird, größer oder gleich 9 µm und kleiner oder gleich 30 µm ist.

3. Negative Elektrode für eine Lithiumionen-Sekundärbatterie nach Anspruch 1 oder 2,
wobei eine mittlere Dicke einer Überzugsschicht, die aus dem auf das Graphitpulver aufgebrachten Kohlenstoffmaterial gebildet wird, größer oder gleich 0,5 nm und kleiner oder gleich 15 nm beträgt.

4. Negative Elektrode für eine Lithiumionen-Sekundärbatterie nach einem der Ansprüche 1 bis 3,
wobei ein Randabschnitt des Graphitpulvers mit dem Kohlenstoffmaterial beschichtet ist.

5. Negative Elektrode für eine Lithiumionen-Sekundärbatterie nach einem der Ansprüche 1 bis 4,
wobei das Graphitpulver natürlichen Graphit enthält.

6. Negative Elektrode für eine Lithiumionen-Sekundärbatterie nach einem der Ansprüche 1 bis 5,
wobei das Bindemittel ein wässriges Bindemittel ist.

7. Schlämme für eine negative Elektrode für eine Lithiumionen-Sekundärbatterie, wobei die Schlämme für eine negative Elektrode aufweist:
ein aktives Material der negativen Elektrode; und
ein Bindemittel,
wobei das aktive Material der negativen Elektrode die folgenden Anforderungen (A), (B) und (C) erfüllt:
(A) Graphitpulver wird als ein Kernmaterial verwendet, und mindestens ein Teil einer Oberfläche des Graphitpulvers ist mit einem Kohlenstoffmaterial beschichtet, das eine geringere Kristallinität hat als das Graphitpulver, und das Kohlenstoffmaterial enthält amorphen Kohlenstoff;
(B) eine spezifische Oberfläche, gemessen unter Verwendung einer Stickstoffadsorptions-BET-Methode, ist größer oder gleich 0,8 m²/g und kleiner oder gleich 5,3 m²/g; und
(C) ein Dibutylphthalat-Absorptionsmaß, gemessen gemäß JIS K 6217-4, ist größer oder gleich 34 cm³/100 g und kleiner oder gleich 43 cm³/100 g,
wobei eine durch thermogravimetrische Analyse berechnete Beschichtungsmenge des Kohlenstoffmaterials größer oder gleich 0,7 Masse-% und kleiner oder gleich 8,0 Masse-% bezogen auf 100 Masse-% des aktiven Materials der negativen Elektrode ist.

8. Schlämme für eine negative Elektrode für eine Lithiumionen-Sekundärbatterie nach Anspruch 7,
wobei eine mittlere Partikelgröße d₅₀ des aktiven Materials der negativen Elektrode in einer Volumen-Partikelgrößenverteilung, die unter Verwendung eines Laserbeugungs-/-streuungs-Partikelgrößenverteilungsmessverfahrens erhalten wird, größer oder gleich 9 µm und kleiner oder gleich 30 µm ist.

9. Schlämme für eine negative Elektrode für eine Lithiumionen-Sekundärbatterie nach Anspruch 7 oder 8,
wobei eine mittlere Dicke einer Überzugsschicht, die aus dem auf das Graphitpulver aufgebrachten Kohlenstoffmaterial gebildet wird, größer oder gleich 0,5 nm und kleiner oder gleich 15 nm ist.

10. Schlämme für eine negative Elektrode für eine Lithiumionen-Sekundärbatterie nach einem der Ansprüche 7 bis 9,
wobei ein Randabschnitt des Graphitpulvers mit dem Kohlenstoffmaterial beschichtet ist.

11. Schlämme für eine negative Elektrode für eine Lithiumionen-Sekundärbatterie nach einem der Ansprüche 7 bis 10,
wobei das Graphitpulver natürlichen Graphit enthält.

12. Schlämme für eine negative Elektrode für eine Lithiumionen-Sekundärbatterie nach einem der Ansprüche 7 bis 11,
wobei das Bindemittel ein wässriges Bindemittel ist.

13. Lithiumionen-Sekundärbatterie mit:
der negativen Elektrode für eine Lithiumionen-Sekundärbatterie nach einem der Ansprüche 1 bis 6;
einer Elektrolytschicht; und
einer positiven Elektrode.

## Revendications

1. Electrode négative pour une batterie rechargeable au lithium-ion, l'électrode négative comprenant :
un matériau actif d'électrode négative ; et
un liant,
dans laquelle le matériau actif d'électrode négative satisfait les exigences (A), (B), et (C) suivantes :
(A) de la poudre de graphite est utilisée en tant que matériau de noyau, et au moins une partie d'une surface de la poudre de graphite est revêtue d'une matière carbonée ayant une cristallinité inférieure à la poudre de graphite, et la matière carbonée contient du carbone amorphe ;
(B) une aire spécifique mesurée à l'aide d'un procédé d'adsorption d'azote BET est supérieure ou égale à 0,8 m²/g et inférieure ou égale à 5,3 m²/g ; et
(C) une quantité d'absorption de phtalate de dibutyle mesurée selon la norme JIS K 6217-4 est supérieure ou égale à 34 cm³/100 g et inférieure ou égale à 43 cm³/100 g, et
dans laquelle une quantité de revêtement de la matière carbonée calculée par analyse thermogravimétrique est supérieure ou égale à 0,7 % en masse et inférieure ou égale à 8,0 % en masse par rapport à 100 % en masse du matériau actif d'électrode négative.

2. Electrode négative pour une batterie rechargeable au lithium-ion selon la revendication 1,
dans laquelle une taille moyenne de particule d₅₀ du matériau actif d'électrode négative dans une distribution granulométrique en volume, qui est obtenue à l'aide d'un procédé de mesure de distribution granulométrique par diffusion diffractive au laser, est supérieure ou égale à 9 µm et inférieure ou égale à 30 µm.

3. Electrode négative pour une batterie rechargeable au lithium-ion selon la revendication 1 ou 2,
dans laquelle une épaisseur moyenne d'une couche de revêtement formée de la matière carbonée qui est revêtue sur la poudre de graphite est supérieure ou égale à 0,5 nm et inférieure ou égale à 15 nm.

4. Electrode négative pour une batterie rechargeable au lithium-ion selon l'une quelconque des revendications 1 à 3,
dans laquelle une portion de bord de la poudre de graphite est revêtue de la matière carbonée.

5. Electrode négative pour une batterie rechargeable au lithium-ion selon l'une quelconque des revendications 1 à 4,
dans laquelle la poudre de graphite contient du graphite naturel.

6. Electrode négative pour une batterie rechargeable au lithium-ion selon l'une quelconque des revendications 1 à 5,
dans laquelle le liant est un liant aqueux.

7. Mélange d'électrode négative pour une batterie rechargeable au lithium-ion, le mélange d'électrode négative comprenant :
un matériau actif d'électrode négative ; et
un liant,
dans laquelle le matériau actif d'électrode négative satisfait les exigences (A), (B), et (C) suivantes :
(A) de la poudre de graphite est utilisée en tant que matériau de noyau, et au moins une partie d'une surface de la poudre de graphite est revêtue d'une matière carbonée ayant une cristallinité inférieure à la poudre de graphite, et la matière carbonée contient du carbone amorphe ;
(B) une aire spécifique mesurée à l'aide d'un procédé d'adsorption d'azote BET est supérieure ou égale à 0,8 m²/g et inférieure ou égale à 5,3 m²/g ; et
(C) une quantité d'absorption de phtalate de dibutyle mesurée selon la norme JIS K 6217-4 est supérieure ou égale à 34 cm³/100 g et inférieure ou égale à 43 cm³/100 g, et
dans laquelle une quantité de revêtement de la matière carbonée calculée par analyse thermogravimétrique est supérieure ou égale à 0,7 % en masse et inférieure ou égale à 8,0 % en masse par rapport à 100 % en masse du matériau actif d'électrode négative.

8. Mélange d'électrode négative pour une batterie rechargeable au lithium-ion selon la revendication 7,
dans laquelle une taille moyenne de particule d₅₀ du matériau actif d'électrode négative dans une distribution granulométrique en volume, qui est obtenue à l'aide d'un procédé de mesure de distribution granulométrique par diffusion diffractive au laser, est supérieure ou égale à 9 µm et inférieure ou égale à 30 µm.

9. Mélange d'électrode négative pour une batterie rechargeable au lithium-ion selon la revendication 7 ou 8,
dans lequel une épaisseur moyenne d'une couche de revêtement formée de la matière carbonée qui est revêtue sur la poudre de graphite est supérieure ou égale à 0,5 nm et inférieure ou égale à 15 nm.

10. Mélange d'électrode négative pour une batterie rechargeable au lithium-ion selon l'une quelconque des revendications 7 à 9,
dans laquelle une portion de bord de la poudre de graphite est revêtue de la matière carbonée.

11. Mélange d'électrode négative pour une batterie rechargeable au lithium-ion selon l'une quelconque des revendications 7 à 10,
dans laquelle la poudre de graphite contient du graphite naturel.

12. Mélange d'électrode négative pour une batterie rechargeable au lithium-ion selon l'une quelconque des revendications 7 à 11,
dans laquelle le liant est un liant aqueux.

13. Batterie rechargeable au lithium-ion comprenant :
l'électrode négative pour une batterie rechargeable au lithium-ion selon l'une quelconque des revendications 1 à 6 ;
une couche d'électrolyte ; et
une électrode positive.
